# EUROPÄISCHE PATENTSCHRIFT

(11) **EP 0 914 268 B1**
(45) Veröffentlichungstag und Bekanntmachung des Hinweises auf die Patenterteilung: **09.07.2003**
(21) Anmeldenummer: 98907869.6
(22) Anmeldetag: 28.01.1998
(51) Int. Cl.: B60S 1/38

(54) **WISCHBLATT FÜR SCHEIBEN VON KRAFTFAHRZEUGEN**
WIPER BLADE
BALAI D'ESSUIE-GLACE DE VEHICULE

(30) Priorität: 14.05.1997 DE 19720095
(43) Veröffentlichungstag der Anmeldung: 12.05.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: DE9800251
(87) Internationale Veröffentlichungsnummer: WO98051550

(56) Entgegenhaltungen:
- EP-A- 0 436 510
- DE-A- 19 501 849
- DE-U- 7 823 553
- GB-A- 2 308 542
- US-A- 2 257 789
- US-A- 3 081 477
- US-A- 5 233 721

## Beschreibung

### Stand der Technik

Bei Wischblättern der im Oberbegriff des Anspruchs 1 bezeichneten Art soll das Tragelement für das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach der Gattung des Anspruchs 1. Bei einem bekannten Wischblatt dieser Art

(DE-PS 12 47 161) hat das Tragelement-senkrecht zur Scheibe gesehen - eine Längsmittelachse, die einer Geraden entspricht. Da jedoch der üblicherweise von einer über die zu wischende Scheibenoberfläche ragende Scheibenfassung an der Fahrzeugkarosserie gehaltene Scheibenrand aus vielerlei Gründen fast immer mehr oder weniger stark gekrümmt ist und/oder aber in der randnahen Umkehr- oder Ablagestellung des Wischblatts in seinem Verlauf von der Erstreckungsrichtung dieser Tragelement-Längsmittelachse - die der Längsmittelachse des Wischblatts entspricht-abweicht, muß die Umkehr- oder Ablegeposition des Wischblatts unerwünscht weit vom Scheibenrand aus nach innen verlegt werden. Dadurch wird das vom Wischblatt überstrichene Wischfeld und damit die Sicht des Fahrzeuglenkers eingeengt. Ein Überstreichen des erhöhten Scheibenrandes mit dem Wischblatt ist mit Rücksicht auf den damit verbundenen Verschleiß der Wischleiste bzw. eine an dieser angeordneten, auf der Scheibe aufliegenden Wischlippe nicht ratsam.

Es sind bereits Bügelwischblätter bekannt (DE-A-195 01 849, US-A-5 233 721, EP-A-0 436 510, US-A-3 081 477), bei denen die Wischleiste gegebenenfalls mit einem Tragelement von Krallen erfasst wird, die an gegenüber einem Hauptbügel untergeordneten Krallenbügeln angeformt sind, wobei am Hauptbügel eine Vorrichtung vorgesehen ist, an der der Wischerarm angreifen kann. Diesen Wischblättern haftet der Nachteil an, dass sie aufwendig zu montieren sind und im Winter zum Einfrieren neigen. Es sind ferner Wischblätter bekannt (DE-U-78 23 553, US-A-2 257 789, FR-A-1 116 801), die keinen Bügelaufbau enthalten und damit die oben genannten Nachteile nicht aufweisen, die aber lediglich für ebene Scheiben geeignet sind, weil sich das Tragelement einer sich ändernden Krümmung nicht anpassen kann.

### Vorteile der Erfindung

Bei dem erfindungsgemäßen Wischblatt mit den kennzeichnenden Merkmalen des Anspruchs 1 ist es möglich, die Erstreckung des Tragelements und damit des Wischblatts dem Verlauf des Scheibenrandabschnitts anzupassen, der im Bereich der Umkehr- oder Ablegeposition dem Wischblatt direkt benachbart ist. Durch diese Maßnahme wird die Konfiguration des Wischfeldes dem Verlauf des betreffenden Scheibenrandabschnitts zumindest stark angenähert und damit der für den Fahrzeuglenker wichtige Seitenbereich des Wischfeldes vergrößert.

Dies kann beispielsweise bei Heck- oder Seitenscheiben des Fahrzeugs, wo der Verlauf der Scheibenränder oft einer Geraden stark angenähert ist dadurch erreicht werden, daß das Tragelement in seiner Längserstreckung wenigstens zwei einen stumpfen Winkel miteinander einschließende, einstückig miteinander verbundene Abschnitte aufweist, die sich in der zur Scheibe im wesentlichen parallelen Verschiebeebene erstrekken.

Bei Front- oder Windschutzscheiben von Kraftfahrzeugen, die beispielsweise aus Gründen der vorgegebenen Karosserieform fast immer einen gekrümmten Verlauf des Scheibenrandes haben, kann es zweckmäßig sein, wenn das Tragelement in seiner Längserstreckung mit einer Krümmung versehen ist, die sich in der zur Scheibe im wesentlichen parallelen Verschiebeebene erstreckt.

Bei bestimmten Scheibenformen kann es von Vorteil sein, wenn sich diese Krümmung lediglich über einen Längsabschnitt erstreckt oder im Bedarfsfall auch über die gesamte Länge des Tragelements fortsetzt.

In bestimmten Fällen ist es insbesondere bei relativ schwach gekrümmten Scheibenrändern fertigungstechnisch vorteilhaft, wenn die Krümmung der Tragelement-Längsmittelachse stetig verläuft; d.h., daß die Krümmung einem Kreisringabschnitt entspricht.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

### In der Zeichnung zeigen:

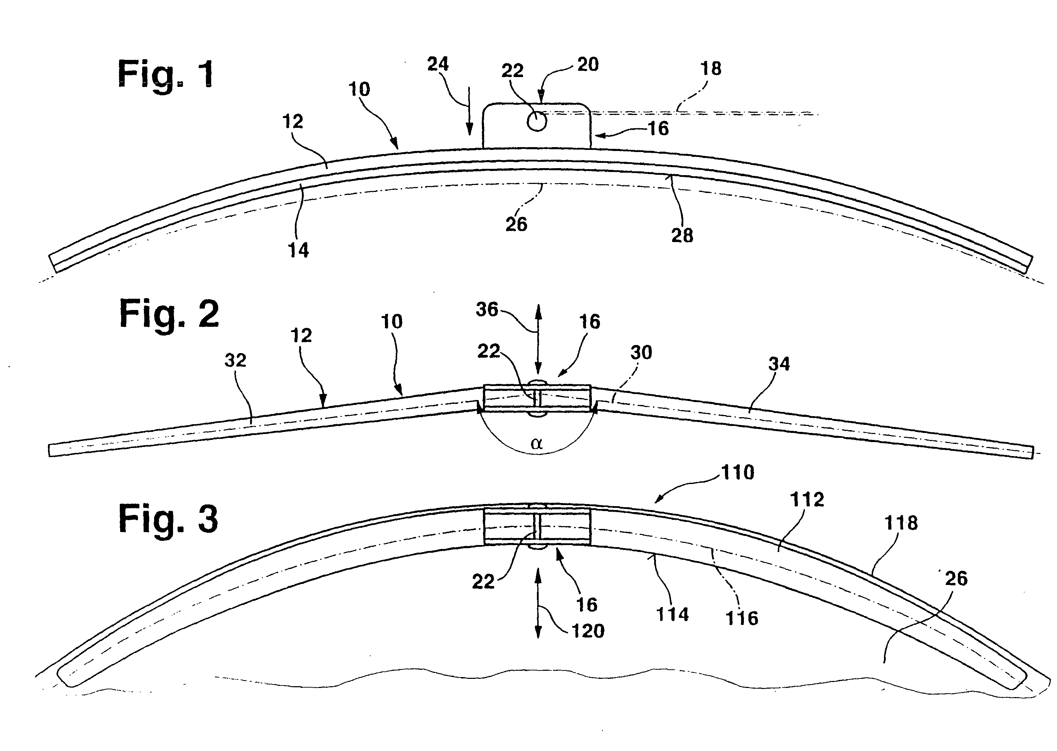

Figur 1 eine Seitenansicht eines erfindungsgemäßen Wischblatts, Figur 2 eine Draufsicht auf das Wischblatt gemäß Figur 1 und Figur 3 eine Draufsicht gemäß Figur 2 auf eine andere Ausführungsform des erfindungsgemäßen Wischblatts.

### Beschreibung der Ausführungsbeispiele

Ein in den Figuren 1 und 2 dargestelltes Wischblatt 10 weist ein bandartiges langgestrecktes, federelastisches Tragelement 12 auf, an dessen Unterseite eine langgestreckte, gummielastische Wischleiste 14 längsachsenparallel befestigt ist. An der Oberseite des auch als Federschiene zu bezeichnenden Tragelements ist in dessen Mittelabschnitte eine Anschlußvorrichtung 16 angeordnet, mit deren Hilfe das Wischblatt 10 mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 un damit auch der Haken am Ende 20 ist in Richtung des Pfeiles 24 zur zu wischenden Scheibe belastet, deren zu wischende Oberfläche in Figur 1 durch eine strichpunktierte Linie angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts stärker ist als die maximale Scheibenkrümmung. Unter dem Anpreßdruck (Pfeil 24) legt sich das Wischblatt 10 mit der zur Wischleiste 14 gehörenden Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw. deren Wischlippe 28 über deren gesamte Länge an der Scheibe sorgt.

Wenn das Wischblatt 10 während des Betriebs bei dem es vom Wischerarm 18 quer zu seiner Längserstreckung über die Scheibe verschoben wird, liegt die Wischleiste 14 mit ihrer Wischlippe 28 auf der Scheibenoberfläche 26 auf. Daraus ergibt sich, daß sich das Wischblatt, bzw. seine Einzelteile-insbesondere das Tragelement 12 in Ebenen bewegen, die im wesentlichen parallel zum Verlauf des vom Wischblatt 10 überstrichenen Scheibenbereichs oder Wischfeldes liegen.

Im folgenden soll auf die besondere Ausgestaltung des Tragelements 12 näher eingegangen werden. Wie Figur 2 zeigt, hat das Tragelement 12 eine Längsmittelachse 30, die einen von einer Geraden abweichenden Verlauf hat. Dies rührt daher, daß das Tragelement 12 in seiner Längserstreckung gesehen zwei einen stumpfen Winkel α miteinander einschließende, einstückig miteinander verbundene Abschnitte 32 und 34 aufweist, die sich in der zur Scheibe im wesentlichen parallelen Verschiebeebene erstrecken. Wie erwähnt, ergibt sich die Verschiebeebene aus der mit einem Doppelpfeil 36 in Figur 2 bezeichneten Verschieberichtung des Wischblatts 10.

Bei der anderen, in Figur 3 dargestellten Ausführungsform des Wischblatts sind die Bezugszahlen der Ausführungsform gemäß den Figuren 1 und 2 übernommen worden, soweit sie nicht diese spezielle Ausführungsform betreffen. Abweichend von der schon geschilderten Ausführungsform des Wischblatts hat das Wischblatt 110 gemäß Figur 3 ein Tragelement 112, welches in seiner Längserstreckung mit einer Krümmung 114 versehen ist, die sich in der zur Scheibe im wesentlichen parallelen Verschiebeebene erstreckt. Somit ist auch die Längsmittelachse 116 des Tragelements 112 und damit die Längsachse des gesamten Wischblatts entsprechend gekrümmt. Beim Ausführungsbeispiel verläuft die Krümmung stetig und setzt sich über die gesamte Länge des Tragelements fort. Es ist jedoch auch denkbar, daß nur ein Teilabschnitt des Tragelements 112 und damit auch nur ein Teil des Wischblatts mit einer Krümmung versehen ist. Aus Figur 3 ist weiter ersichtlich, daß der Rand 118 der Scheibe bzw. die Einfassung des Scheibenrands gekrümmt ist und daß das Wischblatt 110 eine dieser Krümmung zumindest stark angenäherte Krümmung aufweist, welche ein Heranführen der Wischblattumkehrstellung bzw. der Wischblatt-Ablagestellung an diesen Scheibenrand 118 gestattet. Auf diese Weise ist es möglich, für den Fahrzeuglenker wichtige Scheibenbereiche zu wischen und freizuhalten. Die Verschieberichtung des Wischblatts ist in Figur 3 mit dem Doppelpfeil 120 bezeichnet.

Beiden Ausführungsbeispielen ist gemeinsam, daß die Längsmittelachse 30 bzw. 116 des Tragelements 12 bzw. 112 quer zur Verschieberichtung Doppelpfeil 36 bzw. Doppelpfeil 120 des Wischblatts 10 bzw. 110 und in der Verschiebeebene gesehen eine von einer Geraden abbweichende Längserstreckung hat. Die erfindungsgemäße Ausbildung des Wischblatts wird also im wesentlichen dadurch erreicht, daß das Tragelement 12 bzw. 112 in zwei Ebenen gekrümmt ist. Die eine Ebene ist auf der Scheibe stehend angeordnet wobei die Krümmung zur Verteilung der Auflagekraft beiträgt. Die andere Ebene erstreckt sich im wesentlichen parallel zum Verlauf der Scheibe in deren vom Wischblatt überstrichenen Wischfeld.

Zwar ist bei den Ausführungsbeispielen das bandartige Tragelement 12 bzw. 112 einteilig ausgebildet, doch kann dieses auch aus mehreren Teilen bestehen, ohne daß deshalb der Rahmen der vorliegenden Erfindung verlassen wird.

## Patentansprüche

1. Wischblatt für Scheiben von Kraftfahrzeugen mit einer an der zu wischenden Scheibe (26) anlegbaren, langgestreckten, gummielastischen Wischleiste (14), die im wesentlichen längsachsenparallel an der Unterseite eines bandartig langgestreckten, federelastischen Tragelements (12) gehalten ist, an dessen von der Scheibe abgewandten Oberseite im Bereich eines Mittelabschnitts eine Anschlußvorrichtung (20) für einen zur Scheibe belastbaren Wischerarm (18) befestigt ist, der das Wischblatt (10) quer zu dessen Längserstreckung verschiebt wobei das Tragelement (12) sich in einer zur Scheibe im wesentlichen parallelen Ebene befindet, **dadurch gekennzeichnet, daß** die Längsmittelachse (30, 116) des Tragelements (12, 112) quer zur Verschieberichtung (36, 120) und in der Verschiebeebene gesehen eine von einer Geraden abweichende Längserstreckung hat.

2. Wischblatt nach Anspruch 1, **dadurch gekennzeichnet, daß** das Tragelement (12) in seiner Längserstreckung wenigstens zwei einen stumpfen Winkel (α) miteinander einschließende, einstückig miteinander verbundene Abschnitte (32, 34) aufweist, die sich in der zur Scheibe im wesentlichen parallelen Verschiebeebene erstrecken.

3. Wischblatt nach Anspruch 1, **dadurch gekennzeichnet, daß** das Tragelement (112) in seiner Längserstreckung mit einer Krümmung (114) versehen ist, die sich in der zur Scheibe im wesentlichen parallelen Verschiebeebene erstreckt.

4. Wischblatt nach Anspruch 3, **dadurch gekennzeichnet, daß** sich die Krümmung (114) der Tragelement-Längserstreckung im wesentlichen über die gesamte Länge des Tragelements (112) fortsetzt.

5. Wischblatt nach einem der Ansprüche 3 oder 4, **dadurch gekennzeichnet, daß** die Krümmung (114) stetig verläuft.

## Claims

1. Wiper blade for windows of motor vehicles, having a long stretched-out, rubber-elastic wiper strip (14) which can be placed against the window (26) to be wiped and is held essentially parallel to the longitudinal axis on the lower side of a resilient supporting element (12) which is long and stretched-out in the manner of a band and has, fastened to its upper side facing away from the window, in the region of a central section, a connecting device (20) for a wiper arm (18) which can be loaded towards the window and displaces the wiper blade (10) transversely with respect to its longitudinal extent, the supporting element (12) being situated in a plane which is essentially parallel to the window, **characterized in that** the longitudinal central axis (30, 116) of the supporting element (12, 112) has, as seen transversely with respect to the displacement direction (36, 120) and in the displacement plane, a longitudinal extent which differs from a straight line.

2. Wiper blade according to Claim 1, **characterized in that** the supporting element (12) has, in its longitudinal extent, at least two sections (32, 34) which enclose an obtuse angle (α) between them, are connected integrally to each other and extend in the displacement plane essentially parallel to the window.

3. Wiper blade according to Claim 1, **characterized in that** the supporting element (112) is provided, in its longitudinal extent, with a curvature (114) which extends in the displacement plane essentially parallel to the window.

4. Wiper blade according to Claim 3, **characterized in that** the curvature (114) of the longitudinal extent of the supporting element continues essentially over the entire length of the supporting element (112).

5. Wiper blade according to either of Claims 3 and 4, **characterized in that** the curvature (114) has a continuous profile.

## Revendications

1. Balai d'essuie-glace pour vitres de véhicules automobiles, comprenant une lame d'essuie-glace (14) élastique comme du caoutchouc, allongée et pouvant être appliquée sur la vitre (26) à essuyer, cette lame étant maintenue essentiellement avec parallélisme des axes longitudinaux sur la face inférieure d'un élément porteur (12) élastique comme un ressort, allongé en forme de bande tandis que sur la face supérieure éloignée de la vitre de cet élément porteur est fixé dans sa partie centrale un dispositif de raccordement (20) pour un bras d'essuie-glace (18) qui peut être chargé en direction de la vitre et (18) qui déplace la lame d'essuyage (12) perpendiculairement à la direction longitudinale de celle-ci, l'élément porteur (12) se trouvant dans un plan essentiellement parallèle à la vitre,
**caractérisé en ce que**
l'axe longitudinal médian (30, 116) de l'élément porteur (12, 112), perpendiculaire à sa direction de déplacement (36, 120), présente, dans le plan de glissement, un tracé qui s'écarte d'une droite.

2. Balai d'essuie-glace selon la revendication 1,
**caractérisé en ce que**
l'élément porteur (12) a un tracé longitudinal présentant deux parties (32, 34) faisant entre elles un angle obtus (α) reliées de manière à ne faire qu'une seule pièce située dans le plan de glissement essentiellement parallèle à la vitre.

3. Balai d'essuie-glace selon la revendication 1,
**caractérisé en ce que**
l'élément porteur (112) a un tracé longitudinal dessinant une courbe (114) située dans le plan de glissement essentiellement parallèle à la vitre.

4. Balai d'essuie-glace selon la revendication 3,
**caractérisé en ce que**
la courbe (114) du tracé longitudinal de l'élément porteur (112) s'étend sur toute la longueur de celui-ci.

5. Balai d'essuie-glace selon l'une quelconque des revendications 3 ou 4,
**caractérisé en ce que**
la courbe (114) est une courbe circulaire.
